# EUROPEAN PATENT SPECIFICATION

(11) **EP 3 336 142 B1**
(45) Date of publication and mention of the grant of the patent: **01.01.2020**
(21) Application number: 17202167.7
(22) Date of filing: 16.11.2017
(51) Int. Cl.: C08L 9/06

(54) **STYRENE/BUTADIENE RUBBER EXTENTED WITH LOW UNSATURATED SOYBEAN OIL AND TIRE WITH COMPONENT**
STYROL-/BUTADIENGUMMI, GESTRECKT MIT NIEDRIGEM GEHALT AN UNGESÄTTIGTEM SOJAÖL UND REIFEN MIT KOMPONENTE
CAOUTCHOUC DE STYRÈNE/BUTADIÈNE ÉTENDU À L'HUILE DE SOJA FAIBLEMENT INSATURÉE ET PNEU AYANT UN COMPOSANT

(30) Priority: 28.11.2016 US 201615361532
(43) Date of publication of application: 20.06.2018
(73) Proprietor: The Goodyear Tire & Rubber Company, Akron, OH 44316 (US)
(72) Inventor: PAPAKONSTANTOPOULOS, George Jim, Medina, OH Ohio 44256 (US); HAHN, Bruce Raymond, Hudson, OH Ohio 44210 (US); RODEWALD, Stephan, Canal Fulton, OH Ohio 44614 (US)
(74) Representative: Kutsch, Bernd

(56) References cited:
- EP-A1- 2 657 262

## Description

### Field of the Invention

This invention relates to styrene/butadiene rubber extended with a low unsaturation soybean oil. The soybean oil contains a relatively high content of oleic acid ester and is thereby a low unsaturated soybean oil. The invention relates to preparation of styrene/butadiene rubber extended with such specialized soybean oil, a prepared rubber composition and tires with component thereof. Such styrene/butadiene rubber comprises an organic solvent solution polymerization prepared styrene/butadiene elastomer.

### Background of the Invention

Styrene/butadiene copolymer elastomers are sometimes extended with petroleum based rubber processing oils, particularly the elastomers having a high viscosity, namely a high Mooney (ML1+4)(100°C) viscosity.

The term "extended" is used to describe pre-blending the petroleum based rubber processing oil with a low viscosity cement comprised of styrene/butadiene rubber (SSBR) and organic solvent resulting from polymerization of a combination of styrene and 1,3-butadiene monomers in a solvent solution from which a composite comprised of the styrene/butadiene rubber and petroleum based processing oil is recovered. The composite is blended with various rubber compounding ingredients to prepare a rubber composition.

Such pre-blend, rubber cement-based, rubber extension is particularly valuable for extending relatively high viscosity (high Mooney viscosity) rubbers such as for example a relatively high viscosity SSBR, which would otherwise be difficult to blend with the petroleum processing oil because of their relatively high viscosity.

It is important to appreciate that such relatively low viscosity pre-blend based "extending" of the rubber (e.g. SSBR) is very different from more simply blending the petroleum processing oil with solid rubber in a rubber mixer.

As indicated, to enable reasonable processing of relatively high viscosity SSBR elastomers, such relatively high viscosity SSBR elastomers are sometimes blended with petroleum oil at the SSBR manufacturing facility by mixing the petroleum based oil with the relatively low viscosity solvent cement of the relatively high viscosity SSBR product of polymerizing styrene and 1,3-butadiene monomers before recovery of the relatively high viscosity SSBR elastomer from the cement. Such cement may sometimes referred to as a polymerizate.

The resulting composite of the relatively high viscosity SSBR and petroleum oil is then recovered from the cement. The rubber composite is of a significantly lower viscosity than the relatively high viscosity rubber and is easier to process in rubber processing equipment. The rubber composite may therefore be used to prepare rubber compositions by blending with appropriate ingredients.

Exemplary of such petroleum based rubber processing oils are, for example, aromatic, naphthenic and paraffinic based oils, particularly their mixtures.

In one aspect, such pre-blend based extension of elastomers, particularly relatively high viscosity elastomers, has been taught and/or practiced with vegetable triglyceride oils such as soybean oil.

Soybean oil is a vegetable triglyceride oil comprising mixed saturated, mono-unsaturated and polyunsaturated triglyceride esters of fatty acids.

Conventional soybean oil is understood to comprise mixed saturated, mono-unsaturated and polyunsaturated triglyceride esters of fatty acids. The unsaturated ester content of the soybean oil is understood to be conventionally comprise minimal mono-unsaturated triglyceride ester content in a form of oleic acid based ester (e.g. 20 to 35 percent of the unsaturated fatty acid ester components of the soybean oil), and therefore a major content of unsaturated esters of the soybean oil comprising 70 to 80 percent poly-unsaturated esters containing primarily di-functional linoleic acid ester and tri-functional linolenic acid ester.

It is desired to evaluate soybean oil extension of SSBR with a specialized soybean oil containing a significantly increased mono-unsaturated oleic acid ester component of the triglyceride based soybean oil and thereby a significantly reduced unsaturation content of the soybean oil. Such specialized soybean oil is to be obtained as a natural vegetable oil obtained from a hybrid soybean plant.

In one embodiment, at least 65, alternately 75 to 95, percent of the unsaturated fatty acid esters of the specialized soybean oil comprises mono-unsaturated oleic acid ester (wherein the combination of saturated and unsaturated fatty acids comprises 65 to 90 percent of the mono-unsaturated oleic acid ester) and with the remainder of the unsaturated fatty acid esters comprising poly-unsaturated fatty acid esters.

For such evaluation, it is important to appreciate that the triglyceride ester based specialized soybean oil is chemically differentiated from petroleum (hydrocarbon) based oils, in a sense that such specialized soybean oil contains a significant degree of mono-unsaturation (from oleic acid ester) and is clearly not a linear or an aromatic petroleum based oil.

Therefore, the triglyceride based specialized soybean oil contains a very high content of mono-unsaturated oleic fatty acid ester component of the triglyceride esters and a minor content of di-unsaturated linoleic acid ester and tri-unsaturated linolenic acid ester component of the triglyceride. Further, it is considered that such high mono-unsaturation content of the fatty acid ester component of the triglyceride ester based specialized soybean oil is not present in a more conventional soybean oil.

The challenge of extending the SSBR elastomer with the specialized soybean oil in contrast to more conventional soybean oil to prepare a composite thereof and to thereafter prepare a rubber composition containing such composite is to be evaluated with results being unknown until such evaluation is undertaken.

In practice, the chemical composition of soybean oil is determined by gas chromatographic (GC) analysis according to ASTM D5974.

For the gas chromatographic analysis (GC analysis), the triglycerides of the soybean oil are converted into fatty acid methyl esters by reflux in an acidic methanol-toluene azeotrope before the GC analysis. Gas chromatographic analysis of the fatty acid methyl esters can show the high degree of mono-unsaturation of the triglyceride ester based specialized soybean oil.

Historically, a vegetable oil such as for example soybean oil, or soy oil, has been used for mixing with various rubber compositions by free oil addition to the rubber composition rather than soy oil extension of the elastomer at its point of manufacture.. For example, see US-B-7,919,553, US-B-8,100,157 and US-B-8,022,136.

However, as indicated, it is desired to evaluate use of the specialized soybean oil for extending organic solvent solution polymerization prepared styrene/butadiene copolymer elastomers (SSBR), particularly a relatively high viscosity SSBR.

In the description of this invention, the terms "compounded" rubber compositions and "compounds"; where used refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

EP-A-2 657 262 describes a triglyceride containing solution polymerization prepared styrene/butadiene elastomer and a tire with a component comprising such an elastomer. The elastomer comprises a synthetic styrene/butadiene elastomer.

### Summary and Practice of the Invention

The invention relates to a method in accordance with claim 1, to a composite in accordance with claim 8, to a rubber composition in accordance with claim 9 and to a tire in accordance with claim 14.

Dependent claims refer to preferred embodiments of the invention.

The invention is directed to extending a styrene/butadiene elastomer (SSBR) with a specialized triglyceride soybean vegetable oil in its solvent-containing polymerization cement, and thereby before recovery of the SSBR from its cement. The cement is the product of polymerization of styrene and 1,3-butadiene monomers in a solvent solution.

The method involves preparing a soybean oil extended styrene/butadiene rubber (SSBR) comprised of blending a specialized soybean triglyceride oil with a cement comprising organic solvent and styrene/butadiene rubber and recovering a composite from said cement comprised of said specialized soybean oil and SSBR, where the soybean oil comprises saturated and unsaturated fatty acid esters and where said unsaturated fatty acid esters comprise at least 65 percent, alternately 75 to 95 percent, of mono unsaturated oleic acid ester with the remainder of the unsaturated esters comprising poly-unsaturated acid esters comprising primarily of linoleic acid ester and linolenic acid ester.

In accordance with this invention, a method of preparing a triglyceride vegetable oil extended organic solution polymerization prepared styrene/butadiene elastomer is provided, the method comprising, based on parts by weight per 100 parts by weight of elastomer (phr):
(A) anionically initiating polymerization of monomers comprising styrene and 1,3-butadiene in an organic solvent solution to form a synthetic styrene/butadiene elastomer (SSBR) contained in a cement comprising said SSBR and solvent;
(B) terminating said polymerization of said monomers in said cement;
(C) blending from 5 to 60, alternately from 10 to 40, phr of soybean oil with said cement, and
(D) recovering said SSBR as a composite comprising said SSBR and said triglyceride vegetable oil;
wherein said soybean oil is a vegetable triglyceride oil comprising mixed saturated, mono-unsaturated and poly-unsaturated triglyceride esters of fatty acids having its unsaturated fatty acid ester content comprising at least 65 percent, alternately 75 to 95 percent, of mono-unsaturated oleic acid with the remainder of the unsaturated esters comprising poly-unsaturated acid esters containing primarily di-unsaturated linoleic acid ester and tri-unsaturated linolenic acid ester.

In one embodiment, said high oleic acid based ester content specialized soybean oil contains a minimum of 1 percent, and generally in a range of form 1.5 to 5 percent of tri-unsaturated linolenic acid ester.

In one embodiment, said specialized soybean oil is exclusive of plasticized starch containing soybean oil.

In further accordance with this invention, a composite of a specialized soybean oil extended SSBR is provided.

In one embodiment, such SSBR is provided as a tin or silicon coupled SSBR.

In one embodiment, such SSBR is provided as functionalized SSBR containing at least one functional group reactive with hydroxyl groups on a precipitated silica (e.g. at least one of amine, siloxy, thiol and carboxyl groups).

In further accordance with this invention, a rubber composition containing a specialized soybean oil extended SSBR is provided.

In further accordance with this invention, a rubber composition containing said specialized soybean oil extended SSBR is provided which further contains an additive to the rubber composition comprising at least one of triglyceride vegetable oil and petroleum based oil (in addition to the specialized soybean oil contained in the specialized soybean oil extended SSBR). Such additional triglyceride oil and/or petroleum based oil is therefore added to the rubber composition itself. Representative of such additional vegetable triglyceride oils may comprise, for example, at least one of soybean oil, sunflower oil, corn oil, rapeseed oil, canola oil and additional soybean oil where said additional soybean oil has an oleic acid ester content of, for example, in a range of from 15 to 30 percent.

In one embodiment, it is understood that the specialized soybean oil is not inclusive of, and is different from, other vegetable triglyceride oils, even vegetable triglyceride oils which might have a high mono-unsaturated oleic acid ester content because of other inconsistences which they may have relative to the specialized soybean oil.

In additional accordance with this invention, an article of manufacture, such as for example a tire, is provided having a component comprising such rubber composition.

In practice, anionic polymerizations employed in making such SSBR in the organic solvent solution are typically initiated by adding an organolithium initiator to an organic solution polymerization medium which contains the styrene and 1,3-butadiene monomers. Such polymerizations are typically carried out utilizing continuous or batch polymerization techniques. In such continuous polymerizations, monomers and initiator are continuously added to the organic solvent polymerization medium with the synthesized rubbery styrene/butadiene elastomer (SSBR) being continuously withdrawn in its organic solvent solution as a cement thereof. Such continuous polymerizations are typically conducted in a multiple reactor system.

Suitable polymerization methods are known in the art, for example, as disclosed in one or more of US-B-4,843,120; US-B-5,137,998; US-B-5,047,483; US-B-5,272,220; US-B-5,239,009; US-B-5,061,765; US-B-5,405,927; US-B-5,654,384; US-B-5,620,939; US-B-5,627,237; US-B-5,677,402; US-B-6,103,842; and US-B-6,559,240.

Such anionic initiated polymerization typically involves use of an organo alkali metal compound, usually an organo monolithium compound, as an initiator. The first step of the process usually involves contacting the combination of styrene and 1,3-butadiene monomer(s) to be polymerized with the organo monolithium compound (initiator) in the presence of an inert diluent, or solvent, thereby forming a living polymer compound having the simplified structure A-Li. The monomers may be a vinyl aromatic hydrocarbon such as the styrene and a conjugated diene such as the 1,3-butadiene. Styrene is the preferred vinyl aromatic hydrocarbon and the preferred diene is 1,3-butadiene.

The inert diluent, or solvent, may be an aromatic or naphthenic hydrocarbon, e.g., benzene or cyclohexane, which may be modified by the presence of an alkene or alkane such as pentenes or pentanes. Specific examples of other suitable diluents may include n-pentane, hexane such as for example n-hexane, isoctane, cyclohexane, toluene, benzene, xylene and the like. The organomonolithium compounds (initiators) that are reacted with the polymerizable additive in this invention are represented by the formula a RLi, wherein R is an aliphatic, cycloaliphatic, or aromatic radical, or combinations thereof, preferably containing from 2 to 20 carbon atoms per molecule. Exemplary of these organomonolithium compounds are ethyllithium, n-propyllithium, isopropyllithium, n-butyllithium, sec-butyllithium, tertoctyllithium, n-decyllithium, n-eicosyllithium, phenyllithium, 2-naphthyllithium, 4-butylphenyllithium, 4-tolyllithium, 4-phenylbutyllithium, cyclohexyllithium, 3,5-di-n-heptylcyclohexyllithium, 4-cyclopentylbutyl-lithium, and the like. The alkyllithium compounds are preferred for employment according to this invention, especially those wherein the alkyl group contains from 3 to 10 carbon atoms. A much preferred initiator is n-butyllithium.

The amount of organolithium initiator to effect the anionically initiated polymerization will vary with the monomer(s) being polymerized and with the molecular weight that is desired for the polymer being synthesized. However, generally, from 0.01 to 1 phm (parts per 100 parts by weight of monomer) of an organolithium initiator will be often be utilized. In many cases, from 0.01 to 0.1 phm of an organolithium initiator will be utilized with it often being more desirable to utilize 0.025 to 0.07 phm of the organolithium initiator.

The polymerization temperature utilized can vary over a broad range such as, for example, from -20°C to 180°C. However, often a polymerization temperature within a range of 30°C to 125°C will be desired. It is often typically desired for the polymerization temperature to be within a more narrow range of 45°C to 100°C or within a range of from 60°C to 85°C. The pressure used for the polymerization reaction, where applicable, will normally be sufficient to maintain a substantially liquid phase under the conditions of the polymerization reaction.

The SSBRs prepared in the organic solution by the anionically initiated polymerization may be tin or silicon coupled with a suitable coupling agent, such as, for example, a tin halide or a silicon halide, to improve desired physical properties by increasing their molecular weight with a usual increase in their viscosity (e.g. Mooney viscosity of the uncured SSBR). Tin-coupled styrene/butadiene polymers have been observed to improve tire treadwear and to reduce tire rolling resistance when used in tire tread rubbers. Such tin-coupled SSBRs are typically made by coupling the SSBR with a tin coupling agent at or near the end of the polymerization used in synthesizing the SSBR. In the coupling process, live polymer chain ends react with the tin coupling agent, thereby coupling the SSBR. For example, up to four live chain ends can react with tin tetrahalides, such as tin tetrachloride, thereby coupling the polymer chains together.

The coupling efficiency of the tin coupling agent is dependent on many factors, such as the quantity of live chain ends available for coupling and the quantity and type of polar modifier, if any, employed in the polymerization. For instance, tin coupling agents are generally not as effective in the presence of polar modifiers. However, polar modifiers such as tetramethylethylenediamine, are frequently used to increase the glass transition temperature of the rubber for improved properties, such as improved traction characteristics in tire tread compounds. Coupling reactions that are carried out in the presence of polar modifiers typically have a coupling efficiency of 50 to 60 percent in batch processes.

In cases where the SSBR will be used in rubber compositions that are loaded primarily with carbon black reinforcement, the coupling agent for preparing the elastomer may be a tin halide. The tin halide will normally be a tin tetrahalide, such as tin tetrachloride, tin tetrabromide, tin tetrafluoride or tin tetraiodide. However, mono-alkyl tin trihalides can also optionally be used. Polymers coupled with mono-alkyl tin trihalides have a maximum of three arms. This is, of course, in contrast to SSBRs coupled with tin tetrahalides which have a maximum of four arms. To induce a higher level of branching, tin tetrahalides are normally preferred. As a general rule, tin tetrachloride is usually the most preferred.

In cases where the SSBR will be used in compounds that are loaded with high levels of silica, the coupling agent for preparing the SSBR may be a silicon halide. The silicon-coupling agents that can be used will normally be silicon tetrahalides, such as silicon tetrachloride, silicon tetrabromide, silicon tetrafluoride or silicon tetraiodide. However, mono-alkyl silicon trihalides can also optionally be used. SSBRs coupled with silicon trihalides have a maximum of three arms. This is, of course, in contrast to SSBRs coupled with silicon tetrahalides during their manufacture which have a maximum of four arms. To induce a higher level of branching, if desired, of the SSBR during its manufacture, silicon tetrahalides are normally preferred. In general, silicon tetrachloride is usually the most desirable of the silicon-coupling agents for such purpose.

In one embodiment, various organic solvents may be used for the polymerization medium which are relatively inert to the polymerization reaction such as for example, the aforesaid n-pentane, n-hexane, isooctane, cyclohexane, toluene, benzene, xylene and the like, (exclusive, of course, of water based emulsifier containing liquid mediums). Solvent removal from the polymerizate, or cement, may be accomplished using one or more of the methods as are known in the art, including but not limited to precipitation, steam stripping, filtration, centrifugation, drying and the like.

The recovered composite of specialized soybean oil extended SSBR may be compounded (blended) into a vulcanizable (sulfur vulcanizable) rubber composition which may, and will usually, include other elastomers, particularly sulfur curable diene-based elastomers, as is well known to those familiar with such art. The phrase "sulfur curable rubber" or elastomer such as "diene-based elastomers" is intended to include both natural rubber and its various raw and reclaim forms as well as various synthetic rubbers including the SSBR used in the practice of this invention.

In further accordance with this invention, a rubber composition is provided comprising said specialized soybean oil extended SSBR.

In additional accordance with this invention, a rubber composition is provided comprising, based upon parts by weight per 100 parts by weight rubber (phr):
(A) conjugated diene-based elastomers comprising:
   (1) 50 to 100, alternately from 50 to 80, phr of SSBR which is specialized soybean oil extended (the SSBR component of the specialized soybean oil extended SSBR according to this invention), and correspondingly,
   (2) from zero to 50, alternately from 20 to 50, phr of at least one additional elastomer comprising at least one of polymers of at least one of isoprene and 1,3-butadiene and copolymers of styrene and at least one of isoprene and 1,3-butadiene (in addition to and therefore other than said triglyceride oil extended SSBR);
(B) 40 to 110, alternately from 50 to 80, phr of a reinforcing filler comprising:
   (1) silica or amorphous synthetic silica (e.g. precipitated silica), or
   (2) rubber reinforcing carbon black, or
   (3) combination of precipitated silica and rubber reinforcing carbon black (containing, for example, 20 to 99 weight percent of precipitated silica, alternately from 55 to 90 weight percent precipitated silica for silica-rich reinforcing filler and alternately from 20 to 45 weight percent precipitated silica for a carbon black-rich reinforcing filler);
(C) silica coupling agent (for said precipitated silica where said reinforcing filler contains precipitated silica) having a moiety reactive with hydroxyl groups (e.g. silanol groups) on said precipitated silica and another different moiety interactive with carbon-to-carbon double bonds of said conjugated diene-based elastomers (including said SSBR).

In further accordance with this invention a tire is provided which contains at least one component comprising said rubber composition.

Representative examples of said additional rubbers, or elastomers, are, for example, cis 1,4-polyisoprene, cis 1,4-polybutadiene, isoprene/butadiene, styrene/isoprene, styrene/butadiene and styrene/isoprene/butadiene elastomers. Additional examples of elastomers which may be used include 3,4-polyisoprene rubber, carboxylated rubber, silicon-coupled and tin-coupled star-branched elastomers. Often desired rubber or elastomers are cis 1,4-polybutadiene, styrene/butadiene rubber and cis 1,4-polyisorprene rubber.

Such precipitated silicas may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such precipitated silicas may, for example, also be characterized by having a dibutylphthalate (DBP) absorption value, for example, in a range of 100 to 400, and more usually 150 to 300 cc/100g.

Various commercially available precipitated silicas may be used, such as, only for example herein, and without limitation, silicas from PPG Industries under the Hi-Sil trademark with designations 210 and 243; silicas from Rhodia, with, for example, designations of Z1165MP and Z165GR; silicas from Evonic with, for example, designations VN2 and VN3; and chemically treated (pre-hydrophobated) precipitated silicas such as for example Agilon™ 400 from PPG.

Representative examples of rubber reinforcing carbon blacks are, for example, and not intended to be limiting, those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

Other fillers may be used in the vulcanizable rubber composition including, but not limited to, particulate fillers including ultra high molecular weight polyethylene (UHMWPE); particulate polymer gels such as those disclosed in US-B-6,242,534; US-B-6,207,757; US-B-6,133,364; US-B-6,372,857; US-B-5,395,891; or US-B-6,127,488, and plasticized starch composite filler such as that disclosed in US-B-5,672,639. One or more other fillers may be used in an amount ranging from 1 to 20 phr.

It may be desired for the precipitated silica-containing rubber composition to contain a silica coupling agent for the silica comprised of, for example,
(A) bis(3-trialkoxysilylalkyl) polysulfide containing an average in range of from 2 to 4 sulfur atoms in its connecting bridge, or
(B) an organoalkoxymercaptosilane, or
(C) their combination.

Representative of such bis(3-trialkoxysilylalkyl) polysulfide comprising bis(3-triethoxysilylpropyl) polysulfide.

It is readily understood by those having skill in the art that the vulcanizable rubber composition would be compounded by methods generally known in the rubber compounding art, such as, for example, mixing various additional sulfur-vulcanizable elastomers with said SSBR composite and various commonly used additive materials such as, for example, sulfur and sulfur donor curatives, sulfur vulcanization curing aids, such as activators and retarders and processing additives, resins including tackifying resins and plasticizers, petroleum based or derived process oils as well as triglycerides in addition to said triglyceride extended SSBR, fillers such as rubber reinforcing fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of tackifier resins, if used, may comprise, for example, 0.5 to 10 phr, usually 1 to 5 phr. Typical amounts of processing aids comprise 1 to 50 phr. Additional process oils, if desired, may be added during compounding in the vulcanizable rubber composition in addition to the extending specialized soybean oil contained in the specialized soybean oil extended SSBR. The additional petroleum based or derived oils may include, for example, aromatic, paraffinic, naphthenic, and low PCA oils such as MEW, TDAE, and heavy naphthenic, although low PCA oils might be preferred. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, 2 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The vulcanizable rubber composition containing the triglyceride oil extended SSBR may be incorporated in a variety of rubber components of an article of manufacture such as, for example, a tire. For example, the rubber component for the tire may be a tread (including one or more of a tread cap and tread base), sidewall, apex, chafer, sidewall insert, wire coat or innerliner.

Vulcanization of the pneumatic tire of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating and not limiting the present invention. All parts and percentages are parts by weight, usually parts by weight per 100 parts by weight rubber (phr) unless otherwise indicated.

### EXAMPLE I

In this example, the effect of extending an organic solution anionic polymerized styrene and 1,3-butadiene monomers (SSBR) with a vegetable triglyceride soybean oil as a specialized soybean oil having a high mono-unsaturated oleic acid ester component is evaluated and compared to a more conventional soybean oil containing a significantly lower oleic acid ester component content.

Experiments were conducted to evaluate the effect of employing the specialized soybean oil for extension of an SSBR. By the term "extension" or "extended" it is meant that the soybean oil is added to and mixed with a low viscosity polymerization solvent cement of the soybean oil following which composite of the SSBR elastomer and soybean oil is recovered from the cement. The composite is then blended with rubber compounding ingredients to prepare the rubber composition. It is in contrast to simply mixing the SSBR and the soybean oil with rubber compounding ingredients in a rubber mixer to prepare the rubber composition.

Control rubber Sample A contained the SSBR extended by a more conventional soybean oil. (soybean oil pre-blended with the SSBR cement to form a composite thereof).

Experimental rubber Sample B contained the SSBR extended by the specialized soybean oil. (soybean oil pre-blended with the SSBR cement to form a composite thereof).

The rubber Samples were prepared by mixing the elastomers with reinforcing filler as rubber reinforcing carbon black without precipitated silica together in a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the Control rubber Sample A using conventional soybean oil extended SSBR and Experimental rubber Sample B using specialized soybean oil extended SSBR. is presented in the following Table 1 expressed in parts by weight per 100 parts of rubber (phr) unless otherwise indicated.

**Table 1**

| Non-Productive Mixing Stage (NP) | Parts by weight (phr) |
|---|---|
| Conventional soybean oil extended SSBR¹ | 110 or 0 (80 SSBR, 30 soybean oil)* |
| Specialized soybean oil extended SSBR² | 110 or 0 (80 SSBR, 30 soybean oil)** |
| Cis 1,4-polybutadiene elastomer³ | 20 |
| Carbon black⁴ | 85 |
| Wax, microcrystalline | 1.5 |
| Zinc oxide | 2 |
| Fatty acid⁵ | 3 |
| Antioxidant | 2 |
| | |

| Productive Mixing Stage (P) | |
|---|---|
| Sulfur | 1.4 |
| Sulfur cure accelerator(s)⁶ | 2.4 |
| Antioxidant | 0.7 |

| | |
|---|---|
| *80 parts by weight SSBR, 30 parts by weight conventional soybean oil extension **80 parts by weight SSBR, 30 parts by weight specialized soybean oil extension ¹Composite of solution polymerization prepared styrene/butadiene rubber (SSBR) having a Tg of -18°C, 30 percent bound styrene, 41 percent vinyl content for its butadiene portion and for this Example, extended with (thereby containing) 37.5 parts conventional soybean oil per 100 parts SSBR. The conventional soybean oil was a soybean plant-derived triglyceride oil from Cargill Dressings comprising saturated and unsaturated fatty acid esters with a minor portion of its unsaturated fatty acid esters being mono-unsaturated oleic fatty acid ester comprising 32 percent oleic acid ester, 68 percent poly-unsaturated fatty acid esters such as for example linoleic acid ester and linolenic acid ester. The saturated fatty acid esters may be, for example palmitic and stearic acid esters. ²Composite of solution polymerization prepared styrene/butadiene rubber (SSBR) having a Tg of -18°C, 30 percent bound styrene, 41 percent vinyl content for its butadiene portion and, for this Example, extended with (thereby containing) 37.5 parts specialized soybean oil per 100 parts SSBR. The specialized soybean oil was a soybean oil obtained as Plenish™ soybean oil from DuPont as a blend of saturated and unsaturated fatty acid esters with the unsaturated fatty acid esters having a mono-unsaturation oleic acid ester content of 89 percent, a di-unsaturation linoleic acid ester content of 8 percent and a tri-unsaturation linolenic acid ester content of 3 percent. ³Cis 1,4-polybutadiene rubber as BUD1207™ from The Goodyear Tire & Rubber Company ⁴N330 rubber reinforcing carbon black, ASTM identification ⁵Primarily comprised of stearic, palmitic and oleic acids ⁶Sulfenamide and diphenylguanidine accelerators | |

The following Table 2 illustrates cure behavior and various physical properties of rubber compositions based upon the basic recipe of Table 1 and reported herein as a Control rubber Sample A and Experimental rubber Sample B. Where cured rubber samples are examined, such as for the stress-strain, hot rebound and hardness values, the rubber samples were cured for 14 minutes at a temperature of 160°C.

**Table 2**

| | Samples | |
|---|---|---|
| Materials (phr) | Control A | Experimental B |
| Conventional soybean oil extended SSBR | 110 (80 SSBR) | 0 |
| Specialized soybean oil extended SSBR | 0 | 110 (80 SSBR) |
| Cis 1,4-polybutadiene rubber | 20 | 20 |
| | | |

| Properties | | |
|---|---|---|
| RPA¹ (100°C), Storage Modulus G', MPa Predictive Rubber Processing | | |
| Uncured storage modulus G', | | |
| 15% strain,0.83 Hertz (kPa) | 273 | 277 |
| | | |

| Stiffness (greater is better for predictive tread rubber performance) (11 Hertz (kPa) | | |
|---|---|---|
| Cured storage modulus G', 1% strain | 2590 | 2735 |
| Cured storage modulus G', 10% strain | 1286 | 1378 |
| Cured storage modulus G', 15% strain | 1140 | 1224 |
| | | |

| Hysteresis Indication (lower is better for predictive hysteresis reduction) | | |
|---|---|---|
| Tan delta at 1% strain | 0.23 | 0.21 |
| Tan delta at 10% strain | 0.24 | 0.23 |
| Tan delta at 15% strain | 0.23 | 0.22 |
| | | |
| Rebound value of cured rubber, (%), 23°C | 30 | 31 |
| Rebound value of cured rubber, (%), 100°C (higher rebound value is better for predictive hysteresis reduction) | 54 | 57 |

| | | |
|---|---|---|
| ¹Rubber Process Analyzer (RPA) instrument | | |

In Table 2 it is seen that Experimental rubber Sample B containing the composite of SSBR extended with specialized soybean oil contain a high oleic acid ester component content (70 percent) thereby being of a significantly low unsaturation, yielded a rubber composition of a stiffness value (cured rubber storage modulus G' value) of, for example at a 15 percent strain, 1224 kPa, which was a beneficial increase of the stiffness value (modulus G') compared to a value of 1140 kPa for the Control rubber composition A containing the composite of SSBR extended with the more conventional soybean oil containing a low oleic acid ester component content, thereby being a significantly higher unsaturation soybean oil.

In Table 2 it is also seen that Experimental rubber Sample B containing the low unsaturation specialized soybean oil yielded a rubber composition having a tan delta value of, for example, at a 15 percent strain, 0.22 which was beneficial reduction from a value of 0.23 for the Control rubber composition A containing significantly higher unsaturation conventional soybean oil. Therefore, the rubber composition of Experimental rubber Sample B was of a beneficially lower predictive hysteresis than the rubber composition of Control rubber Sample A which, in turn, was of a beneficially lower predictive internal heat generation for the rubber composition (Experimental rubber Sample B) during its dynamic use (service) and predictive of a beneficially lower rolling resistance (increased energy savings) for a tire with tread of such rubber composition.

It is concluded that, although the mechanism might not be fully understood, a significant and beneficial discovery was made for soybean oil extension of the SSBR with a specialized soybean oil of a high oleic acid ester content (89 percent of its unsaturated fatty acid content) compared to a more conventional soybean oil having a significantly lower (30 percent) oleic acid ester content of its unsaturated fatty acid ester. Such discovery may be a result of the high oleic acid ester content of the unsaturated ester portion of the specialized soybean oil and/or of the correspondingly lower unsaturation content of unsaturated ester portion of the specialized soybean oil.

## Claims

1. A method of preparing an oil extended styrene/butadiene rubber (SSBR) comprising blending a soybean triglyceride oil with a cement comprising an organic solvent and a styrene/butadiene rubber (SSBR) and recovering a composite from the blended cement comprising the soybean oil and the SSBR, wherein the soybean oil comprises mixed saturated and unsaturated fatty acid esters, and wherein the unsaturated ester portion of the soybean oil comprises at least 65 percent of oleic acid ester.

2. The method of claim 1, comprising, based on parts by weight per 100 parts by weight of elastomer (phr):
(A) anionically initiating polymerization of monomers comprising styrene and 1,3-butadiene in an organic solvent solution to form a synthetic styrene/butadiene elastomer (SSBR) contained in a cement comprising the SSBR and the solvent;
(B) terminating the polymerization of the monomers in the cement;
(C) blending from 5 to 60 phr of soybean oil with the cement; and
(D) recovering the SSBR as a composite comprising the SSBR and the soybean oil;
wherein the soybean oil is a vegetable triglyceride oil comprising mixed saturated, mono-unsaturated and polyunsaturated triglyceride esters of fatty acids having its unsaturated ester content comprising at least 65 percent of mono-unsaturated oleic acid.

3. The method of either of the preceding claims wherein the unsaturated ester portion of the soybean oil contains 75 to 95 percent mono-unsaturated oleic acid ester component and at least 1 percent linolenic acid ester component.

4. The method of either of the preceding claims 1 and 2 wherein the unsaturated ester portion of the soybean oil contains 75 to 95 percent mono-unsaturated oleic acid ester and from 1.5 to 5 percent linolenic acid ester component.

5. The method of at least one of the preceding claims wherein the SSBR is a tin or silicon coupled SSBR.

6. The method of at least one of the preceding claims wherein the SSBR is a functionalized SSBR containing at least one functional group comprising at least one of amine, siloxy, carboxyl and hydroxyl groups.

7. The method of at least one of the preceding claims wherein the SSBR is the product of an anionic initiated polymerization of styrene and 1,3-butadiene employing n-butyllithium as an initiator in the presence of an inert solvent.

8. A composite of styrene/butadiene rubber (SSBR) extended with a soybean oil wherein the soybean oil is a vegetable triglyceride oil comprising mixed saturated, mono-unsaturated and polyunsaturated triglyceride esters of fatty acids having its unsaturated ester content comprising at least 65 percent of mono-unsaturated oleic acid, the composite optionally further containing at least one additional vegetable triglyceride oil comprising at least one of sunflower oil, rapeseed oil, corn oil canola oil and an additional soybean oil, wherein the unsaturated ester of the additional vegetable triglyceride oil has a mono-unsaturated oleic acid ester content in a range of from 15 to 30 percent.

9. A rubber composition containing a composite of a styrene/butadiene rubber (SSBR) extended with soybean oil, wherein the soybean oil is a vegetable triglyceride oil comprising mixed saturated, mono-unsaturated and polyunsaturated triglyceride esters of fatty acids having its unsaturated ester content comprising at least 65 percent of mono-unsaturated oleic acid.

10. The rubber composition of claim 9 wherein the composite of a styrene/butadiene rubber (SSBR) extended with soybean oil is a composite of a styrene/butadiene rubber (SSBR) comprising an anionically initiated polymerization product of styrene and 1,3-butadiene monomers extended with soybean oil,

11. The rubber composition of claim 9 or 10 wherein the soybean oil is a vegetable triglyceride oil comprising mixed saturated, mono-unsaturated and polyunsaturated triglyceride esters of fatty acids having its unsaturated ester content comprising 75 to 95 percent of mono-unsaturated oleic acid, and wherein the combination of saturated and unsaturated fatty acids comprises 65 to 90 percent of the mono-unsaturated oleic acid ester, with the remainder of the unsaturated fatty acid esters comprising poly-unsaturated fatty acid esters.

12. The rubber composition of claim 9, 10 or 11 further containing at least one additional vegetable triglyceride oil comprising at least one of sunflower oil, rapeseed oil, corn oil canola oil and an additional soybean oil, wherein the unsaturated ester of the the additional vegetable triglyceride oil has a mono-unsaturated oleic acid ester content in a range of from 15 to 30 percent.

13. The rubber composition of claim 9 comprising, based upon parts by weight per 100 parts by weight rubber (phr):
(A) conjugated diene-based elastomers comprising:
(1) from 50 to 100 phr of the soybean oil extended SSBR composite of claim 8, and correspondingly
(2) from zero to 50 phr of at least one additional elastomer comprising at least one of polymers of at least one of isoprene and 1,3-butadiene and copolymers of styrene and at least one of isoprene and 1,3-butadiene;
(B) from 40 to 110 phr of a reinforcing filler comprising:
(1) silica such as amorphous synthetic silica or precipitated silica), or
(2) a carbon black such as a rubber reinforcing carbon black, or
(3) combination of said silica and said carbon black;
(C) a silica coupling agent for said silica where the reinforcing filler contains silica having a moiety reactive with hydroxyl groups on the silica and another different moiety interactive with carbon-to-carbon double bonds of the conjugated diene-based elastomers.

14. A tire having a component, preferably a tread or a tread cap layer, comprising the rubber composition of either of the preceding claims 9 to 13.

15. The tire of claim 14 wherein the reinforcing filler is a combination of rubber reinforcing carbon black and precipitated silica which contains from 20 to 99 weight percent or from 20 to 45 weight percent thereof of the precipitated silica.

## Patentansprüche

1. Verfahren zum Herstellen eines ölgestreckten Styrol-/Butadien-Kautschuks (*styrene*/*butadiene rubber -* SSBR), umfassend ein Mischen eines Sojatriglyceridöls mit einem Zement, der ein organisches Lösungsmittel und einen Styrol-/Butadien-Kautschuk (SSBR) umfasst, und Gewinnen eines Verbundstoffs aus dem gemischten Zement, der das Sojaöl und den SSBR umfasst, wobei das Sojaöl gemischte gesättigte und ungesättigte Fettsäureester umfasst, und wobei der ungesättigte Esterabschnitt des Sojaöls wenigstens 65 Prozent Ölsäureester umfasst.

2. Verfahren nach Anspruch 1, Folgendes basierend auf Gewichtsteilen pro 100 Gewichtsteilen Elastomer (phr) umfassend:
(A) anionisches Initiieren der Polymerisation von Monomeren, die Styrol und 1,3-Butadien umfassen, in einer organischen Lösungsmittellösung, um ein synthetisches Styrol-/Butadien-Elastomer (SSBR) auszubilden, das in einem Zement enthalten ist, der den SSBR und das Lösungsmittel umfasst;
(B) Beenden der Polymerisation der Monomere in dem Zement;
(C) Vermischen von 5 bis 60 phr Sojaöl mit dem Zement; und
(D) Gewinnen des SSBR als einen Verbundstoff, der den SSBR und das Sojaöl umfasst;
wobei das Sojaöl ein pflanzliches Triglyceridöl ist, das gemischte gesättigte, einfach ungesättigte und mehrfach ungesättigte Triglyceridester von Fettsäuren umfasst, dessen Gehalt an ungesättigten Estern wenigstens 65 Prozent einfach ungesättigter Ölsäure umfasst.

3. Verfahren nach einem der vorhergehenden Ansprüche, wobei der ungesättigte Esterabschnitt des Sojaöls 75 bis 95 Prozent einfach ungesättigter Ölsäureesterkomponente und wenigstens 1 Prozent Linolensäureesterkomponente enthält.

4. Verfahren nach einem der vorhergehenden Ansprüche 1 und 2, wobei der ungesättigte Esterabschnitt des Sojaöls 75 bis 95 Prozent einfach ungesättigten Ölsäureester und von 1,5 bis 5 Prozent Linolensäureesterkomponente enthält.

5. Verfahren nach wenigstens einem der vorhergehenden Ansprüche, wobei der SSBR ein Zinn- oder Silicium-gekoppelter SSBR ist.

6. Verfahren nach wenigstens einem der vorhergehenden Ansprüche, wobei der SSBR ein funktionalisierter SSBR ist, der wenigstens eine funktionelle Gruppe enthält, die Amin-, Siloxy-, Carboxyl- und/oder Hydroxylgruppen umfasst.

7. Verfahren nach wenigstens einem der vorhergehenden Ansprüche, wobei der SSBR das Produkt einer anionischen initiierten Polymerisation von Styrol und 1,3-Butadien unter Anwendung von n-Butyllithium als einen Initiator in der Gegenwart eines inerten Lösungsmittels ist.

8. Verbundstoff aus Styrol-/Butadien-Kautschuk (SSBR), gestreckt mit einem Sojaöl, wobei das Sojaöl ein pflanzliches Triglyceridöl ist, das gemischte gesättigte, einfach ungesättigte und mehrfach ungesättigte Triglyceridester von Fettsäuren umfasst, dessen Gehalt an ungesättigten Estern wenigstens 65 Prozent einfach ungesättigter Ölsäure umfasst, wobei der Verbundstoff optional ferner wenigstens ein zusätzliches pflanzliches Triglyceridöl enthält, das Sonnenblumenöl, Rapsöl, Meiskeimöl, Doppelnullöl und/oder ein zusätzliches Sojaöl umfasst, wobei der ungesättigte Ester des zusätzlichen pflanzlichen Triglyceridöls einen einfach ungesättigten Ölsäureestergehalt in einem Bereich von 15 bis 30 Prozent aufweist.

9. Kautschukzusammensetzung, die einen Verbundstoff aus einem Styrol-/Butadien-Kautschuk (SSBR) enthält, der mit Sojaöl gestreckt ist, wobei das Sojaöl ein pflanzliches Triglyceridöl ist, das gemischte gesättigte, einfach ungesättigte und mehrfach ungesättigte Triglyceridester von Fettsäuren umfasst, dessen Gehalt an ungesättigten Estern wenigstens 65 Prozent einfach ungesättigter Ölsäure umfasst.

10. Kautschukzusammensetzung nach Anspruch 9, wobei der mit Sojaöl gestreckte Verbundstoff aus einem Styrol-/Butadien-Kautschuk (SSBR) ein Verbundstoff aus einem Styrol-/Butadien-Kautschuk (SSBR) ist, der ein anionisch initiiertes Polymerisationsprodukt von Styrol und mit Sojaöl gestreckten 1,3-Butadienmonomeren umfasst,

11. Kautschukzusammensetzung nach Anspruch 9 oder 10, wobei das Sojaöl ein pflanzliches Triglyceridöl ist, das gemischte gesättigte, einfach ungesättigte und mehrfach ungesättigte Triglyceridester von Fettsäuren umfasst, dessen Gehalt an ungesättigten Estern 75 bis 95 Prozent einfach ungesättigter Ölsäure umfasst, und wobei die Kombination aus gesättigten und ungesättigten Fettsäuren 65 bis 90 Prozent des einfach ungesättigten Ölsäureesters umfasst, wobei der Rest der ungesättigten Fettsäureester mehrfach ungesättigte Fettsäureester umfasst.

12. Kautschukzusammensetzung nach Anspruch 9, 10 oder 11, die ferner wenigstens ein zusätzliches pflanzliches Triglyceridöl enthält, das Sonnenblumenöl, Rapsöl, Maisöl, Doppelnullöl und/oder ein zusätzliches Sojaöl umfasst, wobei der ungesättigte Ester des zusätzlichen pflanzlichen Triglyceridöls einen einfach ungesättigten Ölsäureestergehalt in einem Bereich von 15 bis 30 Prozent aufweist.

13. Kautschukzusammensetzung nach Anspruch 9, Folgendes basierend auf Gewichtsteilen pro 100 Gewichtsteilen Kautschuk (phr) umfassend:
(A) konjugierte Elastomere auf Dienbasis, Folgendes umfassend:
(1) 50 bis 100 phr des mit Sojaöl gestreckten SSBR-Verbundstoffs nach Anspruch 8 und entsprechend
(2) von null bis 50 phr wenigstens eines zusätzlichen Elastomers, umfassend Polymere von Isopren und/oder 1,3-Butadien und/oder Copolymere von Styrol und Isopren und/oder 1,3-Butadien;
(B) 40 bis 110 phr eines verstärkenden Füllstoffs, Folgendes umfassend:
(1) Siliciumdioxid, wie etwa amorphes synthetisches Siliciumdioxid oder ausgefälltes Siliciumdioxid), oder
(2) einen Industrieruß, wie etwa einen kautschukverstärkenden Industrieruß, oder
(3) eine Kombination des Siliciumdioxids und des Industrierußes;
(C) einen Siliciumdioxidhaftvermittler für das Siliciumdioxid, wobei der verstärkende Füllstoff Siliciumdioxid mit einem Molekülteil, der mit Hydroxylgruppen an dem Siliciumdioxid reaktiv ist, und einem unterschiedlichen Molekülteil, der mit Kohlenstoff-Kohlenstoff-Doppelbindungen der konjugierten Elastomere auf Dienbasis wechselwirkt, enthält.

14. Reifen mit einer Komponente, bevorzugt einer Lauffläche oder einer Laufflächenkronenschicht, die die Kautschukzusammensetzung nach einem der vorhergehenden Ansprüche 9 bis 13 umfasst.

15. Reifen nach Anspruch 14, wobei der verstärkende Füllstoff eine Kombination von kautschukverstärkendem Industrieruß und ausgefälltem Siliciumdioxid ist, das von 20 bis 99 Gewichtsprozent oder von 20 bis 45 Gewichtsprozent davon des ausgefällten Siliciumdioxids enthält.

## Revendications

1. Procédé de préparation d'un caoutchouc de styrène/butadiène (SSBR) allongé à l'huile comprenant le fait de mélanger une huile de triglycéride de soja avec un ciment comprenant un solvant organique et un caoutchouc de styrène/butadiène (SSBR) et le fait de récupérer un composite à partir du ciment mélangé comprenant l'huile de soja et le SSBR ; dans lequel l'huile de soja comprend des esters mixtes d'acides gras saturés et insaturés ; et dans lequel la portion de l'ester insaturé de l'huile de soja comprend au moins 65 % d'ester d'acide oléique.

2. Procédé selon la revendication 1, comprenant, en se basant sur des parties en poids par 100 parties en poids d'élastomère (phr) :
(A) le fait de déclencher par voie anionique une polymérisation de monomères comprenant du styrène et du 1,3-butadiène dans une solution à base d'un solvant organique pour obtenir un élastomère synthétique de styrène/butadiène (SSBR) contenu dans un ciment comprenant le SSBR et le solvant ;
(B) le fait de mettre un terme à la polymérisation des monomères dans le ciment ;
(C) le fait de mélanger de 5 à 60 phr d'huile de soja avec le ciment ; et
(D) le fait de récupérer le SSBR sous la forme d'un composite comprenant le SSBR et l'huile de soja ;
dans lequel l'huile de soja est une huile végétale de triglycéride comprenant des esters mixtes d'acides gras de triglycérides saturés, monoinsaturés et polyinsaturés dont la teneur en ester insaturé comprend au moins 65 % d'acide oléique monoinsaturé.

3. Procédé selon l'une quelconque des revendications précédentes, dans lequel la portion d'ester insaturé de l'huile de soja comprend de 75 à 95 % du composant d'ester d'acide oléique monoinsaturé et au moins 1 % d'un composant d'ester d'acide linolénique.

4. Procédé selon l'une quelconque des revendications 1 et 2, dans lequel la portion d'ester insaturé de l'huile de soja contient de 75 à 95 % d'ester d'acide oléique monoinsaturé et de 1,5 à 5 % d'un composant ester d'acide linolénique.

5. Procédé selon au moins une des revendications précédentes, dans lequel le SSBR représente un SSBR couplé à l'étain ou couplé au silicium.

6. Procédé selon au moins une des revendications précédentes, dans lequel le SSBR représente un SSBR fonctionnalisé contenant au moins un groupe fonctionnel comprenant au moins un groupe choisi parmi un groupe amine, un groupe siloxy, un groupe carboxyle et un groupe hydroxyle.

7. Procédé selon au moins une des revendications précédentes, dans lequel le SSBR représente le produit d'une polymérisation déclenchée par voie anionique de styrène et du 1,3-butadiène en utilisant du n-butyllithium à titre d'initiateur en présence d'un solvant inerte.

8. Composite d'un caoutchouc de styrène/butadiène (SSBR) allongé avec une huile de soja, dans lequel l'huile de soja représente une huile végétale de triglycéride comprenant des esters mixtes d'acides gras de triglycérides saturés, monoinsaturés et polyinsaturés dont la teneur en ester insaturé comprend au moins 65 % d'acide oléique monoinsaturé, le composite comprenant de manière facultative également au moins une huile végétale supplémentaire de triglycéride comprenant au moins une huile choisie parmi l'huile de tournesol, l'huile de colza, l'huile de maïs, l'huile de canola et une huile de soja supplémentaire ; dans lequel l'ester insaturé de l'huile végétale supplémentaire de triglycéride possède une teneur en ester d'acide oléique monoinsaturé dans une plage de 15 à 30 %.

9. Composition de caoutchouc contenant un composite d'un caoutchouc de styrène/butadiène (SSBR) allongé avec une huile de soja, dans lequel l'huile de soja représente une huile végétale de triglycéride comprenant des esters mixtes d'acides gras de triglycérides saturés, monoinsaturés et polyinsaturés dont la teneur en ester insaturé comprend au moins 65 % d'acide oléique monoinsaturé.

10. Composition sur de caoutchouc selon la revendication 9, dans lequel le composite d'un caoutchouc de styrène/butadiène (SSBR) allongé avec une huile de soja représente un composite d'un caoutchouc de styrène/butadiène (SSBR) comprenant un produit de polymérisation déclenchée par voie anionique et de monomères de styrène et du 1,3-butadiène, allongés avec de l'huile de soja.

11. Composition de caoutchouc selon la revendication 9 ou 10, dans laquelle l'huile de soja représente une huile végétale de triglycéride comprenant des esters mixtes d'acides gras de triglycérides saturés, monoinsaturés et polyinsaturés dont la teneur en ester insaturé comprend de 75 à 95 % d'acide oléique monoinsaturé ; et dans laquelle la combinaison d'acides gras saturés et insaturés comprend de 65 à 90 % d'ester d'acide oléique monoinsaturé, le reste des esters d'acides gras insaturés comprenant des esters d'acides gras polyinsaturés.

12. Composition de caoutchouc selon la revendication 9, 10 ou 11, comprenant en outre au moins une huile végétale supplémentaire de triglycéride comprenant au moins une huile choisie parmi l'huile de tournesol, l'huile de colza, l'huile de maïs, l'huile de canola et une huile de soja supplémentaire ; dans laquelle l'ester insaturé de l'huile végétale supplémentaire de triglycéride possède une teneur en ester d'acide oléique monoinsaturé dans une plage de 15 à 30 %.

13. Composition de caoutchouc selon la revendication 9 comprenant, en se basant sur des parties en poids par 100 parties en poids de caoutchouc (phr) :
(A) des élastomères à base de diènes conjugués comprenant :
(1) de 50 à 100 phr du composite SSBR allongé avec de l'huile de soja selon la revendication 8, et de manière correspondante ;
(2) de zéro à 50 phr d'au moins un élastomère supplémentaire d'au moins un polymère choisi parmi des polymères comprenant au moins un monomère choisi parmi l'isoprène et le 1,3-butadiène et des copolymères de styrène et d'au moins un monomère choisi parmi l'isoprène et le 1,3-butadiène ;
(B) de 40 à 110 phr d'une matière de charge pour le renforcement comprenant :
(1) de la silice telle que de la silice synthétique amorphe ou de la silice précipitée ; ou
(2) un noir de carbone tel qu'un noir de carbone pour le renforcement du caoutchouc ; ou
(3) une combinaison de ladite silice et dudit noir de carbone ;
(C) un agent de couplage pour la silice en question, dans laquelle la matière de charge pour le renforcement contient de la silice possédant une fraction apte à réagir avec des groupes hydroxyle sur la silice et une autre fraction différente apte à entrer en interaction avec des doubles liaisons carbone-carbone des élastomères à base de diènes conjugués.

14. Bandage pneumatique possédant un composant, de préférence une bande de roulement ou une couche de sommet de bande de roulement, comprenant la composition de caoutchouc selon l'une quelconque des revendications précédentes 9 à 13.

15. Bandage pneumatique selon la revendication 14, dans lequel la matière de charge pour le renforcement représente une combinaison de noir de carbone pour le renforcement du caoutchouc et de silice précipitée qui contient de 20 à 99 % en poids ou de 20 à 45 % en poids de silice précipitée.
